# FASCICULE DE BREVET EUROPEEN

(11) **EP 1 946 330 B1**
(45) Date de publication et mention de la délivrance du brevet: **17.02.2010**
(21) Numéro de dépôt: 06807294.1
(22) Date de dépôt: 16.10.2006
(51) Int. Cl.: G21C 21/02, G21C 3/10

(54) **MANCHON DE PROTECTION POUR GAINE DE COMBUSTIBLE, PROCEDE DE FABRICATION DE CRAYONS DE COMBUSTIBLE ET DISPOSITIF POUR LA MISE EN OEUVRE DUDIT PROCEDE**
BRENNSTOFFMANTELUNGS-SCHUTZKRAGEN, VERFAHREN ZUM HERSTELLEN VON BRENNSTOFFSTÄBEN UND EINRICHTUNG ZUM AUSFÜHREN DES VERFAHRENS
FUEL CLADDING PROTECTIVE COLLAR, METHOD FOR PRODUCING FUEL RODS AND DEVICE FOR CARRYING OUT SAID METHOD

(30) Priorité: 18.10.2005 FR 0553155
(43) Date de publication de la demande: 23.07.2008
(73) Titulaire: Areva NC, 75009 Paris (FR)
(72) Inventeur: BARITEAU, Jean-Pierre, F-30130 Pont Saint Esprit (FR); MARCHAND, Michel, F-78330 Fontenay Le Fleury (FR)
(74) Mandataire: Poulin, Gérard
(86) Numéro de dépôt international: PCT/EP2006/067436
(87) Numéro de publication internationale: WO 2007/045627

(56) Documents cités:
- EP-A- 0 627 743
- FR-A- 2 281 635
- FR-A- 2 522 436
- US-A- 3 925 965
- US-A- 4 548 347
- US-A1- 2004 105 521

## Description

### DOMAINE TECHNIQUE ET ART ANTÉRIEUR

L'invention concerne un manchon de protection pour gaine de combustible, un procédé de fabrication de crayons de combustible et un dispositif pour la mise en oeuvre dudit procédé.

La principale application de cette invention concerne le domaine nucléaire et les combustibles radioactifs.

Plus précisément, l'invention concerne un manchon pour le gainage de pastilles de combustible dans une gaine, de préférence tubulaire et métallique.

Cette opération se déroule au niveau d'un nez d'engainage traversé d'un passage et dont l'un des côtés reçoit de manière étanche une extrémité de la gaine et dont l'autre côté reçoit les pastilles de combustible qui arrivent en file afin de remplir la gaine, laquelle est ultérieurement refermée.

Il est important de protéger l'espace dans lequel se trouve la gaine de la pollution et/ou contamination qui peuvent être générées par les pastilles. Il existe également un risque de contamination de l'extrémité de la gaine par laquelle le remplissage est effectué.

Pour ne pas risquer de transmettre cette pollution et/ou contamination de la gaine, on prévoit dans une première étape de nettoyer l'extrémité du crayon. Cette opération de nettoyage s'effectue à sec, par frottement de la surface concernée par un chiffon. Ce nettoyage est habituellement réalisé après l'opération d'engainage (c'est-à-dire après séparation du crayon ainsi formé du nez d'engainage). Puis, dans une deuxième étape, on nettoie la surface latérale extérieure de la gaine.

Ces nettoyages sont réalisés de manière automatique et télécommandée. C'est une opération qui est délicate et minutieuse à réaliser, la qualité du nettoyage dépendant en particulier du temps qui y est consacré.

Après son remplissage, le crayon est refermé lors d'une opération de bouchonnage à l'issue de laquelle on détecte le taux de contamination de la gaine : si ce taux est au dessus d'une valeur seuil prédéterminée, on réalise une étape supplémentaire de nettoyage, généralement de manière manuelle, au contact du crayon qui est irradiant et contaminant.

Le document US 4 548 347 décrit un système de chargement de pastilles dans une gaine, ce système comportant un entonnoir pénétrant dans la gaine, un tube entourant l'entonnoir et la gaine et les maintenant de manière unitaire.

C'est par conséquent un but de la présente invention d'offrir un procédé de fabrication de crayon de combustible nucléaire permettant de réduire les étapes de nettoyage.

C'est également un but de la présente invention d' offrir un dispositif de fabrication de crayon de combustible nucléaire permettant de protéger le crayon des contaminations.

### EXPOSÉ DE L'INVENTION

Les buts précédemment énoncés sont atteints par un procédé de fabrication prévoyant la mise en place d'un manchon de protection de l'extrémité ouverte de la gaine et de retrait de ce manchon avant la mise en place d'un bouchon.

La présente invention a pour objet un manchon de protection pour gaine de combustible nucléaire comportant un corps d'axe longitudinal muni d'un passage, au moins une partie dudit passage étant apte à coopérer de manière étanche avec une paroi périphérique d'une gaine, le passage comportant une première partie de plus petit diamètre et une deuxième partie de plus grand diamètre, au moins une partie de ladite deuxième partie étant apte à coopérer de manière étanche avec la paroi périphérique de la gaine, lesdites première et deuxième parties se raccordant par un épaulement, ledit épaulement étant apte à venir protéger une face d'extrémité ouverte de la gaine, le manchon étant d'un seul tenant et la première partie de plus petit diamètre ayant un diamètre sensiblement égal au diamètre intérieur du nez d'engainage.

Dans un exemple de réalisation, le manchon comporte également des moyens de préhension formés sur une paroi extérieure du manchon. Ces moyens sont, par exemple formés par une gorge.

Dans un autre exemple de réalisation, le manchon comporte à une extrémité du côté de la partie de plus petit diamètre, un décrochement muni d'un joint.

Avantageusement, le manchon comporte des bourrelets d'étanchéité en saillie d'une paroi interne de la deuxième partie de plus grand diamètre et aptes à venir en contact étanche avec une paroi extérieure de la gaine.

La présente invention a également pour objet un dispositif de fabrication de crayons de combustible d'axe longitudinal à l'aide d'une gaine et d'un manchon de protection tubulaire selon la présente invention comportant un passage muni d'un épaulement intérieur destiné à protéger une face de l'extrémité ouverte de la gaine, et de pastilles de combustible comprenant :
- un nez d'engainage traversé d'un passage s'étendant entre un côté amont pour l'arrivée desdites pastilles de combustible et un côté aval, apte à recevoir l'extrémité de la gaine munie du manchon,
- des moyens de délimitation aptes à coopérer avec le manchon pour séparer de manière étanche la zone aval de la zone amont,
- des moyens d'alimentation aptes à amener lesdites pastilles de combustible dans ladite zone amont,
- des moyens pour l'introduction desdites pastilles de combustible dans ledit côté amont du passage du nez d'engainage et dans la gaine,
- des moyens d'entraînement escamotables aptes à coopérer avec ladite gaine pour permettre le mouvement de ladite gaine dans ladite zone aval en direction et/ou depuis ledit nez d'engainage entre une position écartée dans laquelle la gaine est en dehors dudit passage et ladite position accostée,
- des moyens de retrait dudit manchon de ladite gaine.

En particulier, le côté aval est conformé pour coopérer de manière à entourer une première extrémité de ladite gaine, ladite première extrémité de la gaine étant entourée par ledit manchon, ledit côté aval du passage étant apte à venir en contact étanche avec la face externe de la première extrémité dudit manchon dans une position accostée.

Avantageusement, le nez d'engainage et les moyens de délimitation sont de symétrie de révolution autour de l'axe longitudinal.

En outre, le dispositif peut comporter des moyens de mise en place dudit manchon autour de ladite gaine sur un tronçon d'extrémité de ladite gaine comprenant ladite première extrémité.

De manière avantageuse, l'extrémité du passage du nez d'engainage située du côté aval dudit passage présente une face interne en forme de tronc de cône allant en se rétrécissant en direction du côté amont dudit passage.

Le dispositif peut, en outre, comporter des moyens de guidage, situés en aval desdits moyens de délimitation et permettant d'orienter les mouvements de ladite gaine par rapport audit côté aval du nez d' engainage.

Dans un troisième exemple de réalisation, lesdits moyens de délimitation comprennent un joint annulaire gonflable apte à entourer ledit tronçon de démarcation dudit manchon et apte à venir en contact contre la face externe dudit tronçon de démarcation dans une position active.

Dans une réalisation, les moyens de retrait peuvent comporter une pince de préhension munie d'au moins deux parties aptes à enserrer ladite première extrémité du manchon selon la présente invention, et équipée d'au moins une saillie radiale destinée à coopérer avec ladite gorge pour retenir ledit manchon et le séparer de ladite gaine par traction.

Dans une autre réalisation lesdits moyens de retrait comprennent au moins un élément formant poussoir, susceptible de venir entourer ladite gaine sur au moins une partie de son contour derrière la deuxième extrémité dudit manchon, et apte à entraîner ledit manchon par poussée en le séparant de ladite gaine par glissement.

Dans un deuxième exemple de réalisation, lesdits moyens de délimitation comportent un joint annulaire logé dans une rainure annulaire située sur la face externe de la première extrémité du manchon.

Dans un troisième exemple de réalisation, lesdits moyens de délimitation comprennent un joint à lèvre, ladite lèvre étant apte à entourer ledit tronçon de démarcation dudit manchon et apte à venir en contact étanche contre la face externe dudit tronçon de démarcation dans une position serrée.

De cette manière, on comprend que le manchon protège la gaine pendant toute l'opération d'engainage et qu'il est ensuite retiré et évacué dans un réceptacle à déchets, pour traitement ultérieur.

Ainsi, on assure la non pollution et/ou non contamination de la face extérieure de la gaine du crayon de combustible d'une manière simple et efficace, pouvant être automatisée, en engendrant une quantité minime de déchets.

De cette manière, on s'affranchit des nettoyages mentionnés précédemment et on minimise les opérations de nettoyage qui doivent être réalisées manuellement, celles-ci requérant la présence d'opérateurs à proximité et/ou au contact des gaines et/ou des crayons de combustible.

En outre, la suppression ou pour le moins la minimisation de ces opérations de nettoyage entraîne un gain de temps important dans les productions de ces crayons de combustible.

La présente invention a également pour objet un procédé de fabrication de crayons de combustible **caractérisé en ce qu**'il comporte les étapes :
a) de mise en place d'un manchon selon la présente invention sur une extrémité ouverte d'une gaine, ledit manchon comportant un passage muni d'un épaulement intérieur destiné à protéger une face de l'extrémité ouverte de la gaine,
b) d'insertion de l'extrémité de la gaine munie du manchon dans le nez d'engainage,
c) d'isolation d'un espace recevant des pastilles et d'un espace extérieur,
d) de remplissage de la gaine en pastilles,
e) d'interruption dudit remplissage lorsque la gaine contient un nombre déterminé de pastilles,
f) de retrait de l'extrémité de la gaine du nez d'engainage,
g) d'ablation du manchon.

Le procédé selon la présente invention peut comporter également l'étape de mise en place d' un bouchon sur l'extrémité ouverte de la gaine.

Lors de l'étape b), on peut activer des moyens d'entraînement afin d'amener ladite gaine vers ledit nez d'engainage jusqu'à ce que l'extrémité ouverte de ladite gaine accoste ledit nez d'engainage.

Lors de l'étape c), on active des moyens de délimitation pour qu'ils coopèrent de manière étanche avec toute la périphérie d'un tronçon de démarcation du manchon pour isoler ladite zone recevant les pastilles de ladite zone extérieure.

Lors de l'étape d), on active des moyens d'alimentation pour amener lesdites pastilles de combustible dans ladite zone amont, et on active des moyens pour l'introduction desdites pastilles de combustible dans le passage dudit nez d'engainage jusqu'à ce que la quantité désirée de pastilles de combustible soit contenue dans ladite gaine.

Lors de l'étape e), on désactive lesdits moyens d'alimentation et lesdits moyens pour l'introduction de pastilles de combustible.

En outre, lors de l'étape e), on active lesdits moyens d'entraînement afin de séparer ladite gaine dudit nez d'engainage jusqu'à ce que ladite gaine soit située dans ladite zone aval.

On prévoit également lors de l'étape g), d'activer des moyens de retrait, afin de séparer ledit manchon de ladite gaine, et on évacue ledit manchon.

La description qui va suivre et les dessins qui l'illustrent ne sont donnés qu'à titre indicatif et non limitatif.

### BRÈVE DESCRIPTION DES DESSINS

Il sera fait référence aux dessins annexés dans lesquels :
- les figures 1 à 3 sont des vues en élévation schématique d'un premier mode de réalisation d'un dispositif pour la fabrication selon l'invention depuis le côté et pendant différentes étapes du procédé de fabrication d'un crayon de combustible,
- la figure 4 est une vue détaillée de la zone IV de la figure 1,
- les figures 5 à 10 sont des vues en élévation schématique d'un deuxième mode de réalisation d'un dispositif pour la fabrication selon l'invention depuis le côté et pendant différentes étapes du procédé de fabrication d'un crayon de combustible,
- les figures 11 et 12 sont des vues détaillées similaires à celle de la figure 4, représentant différentes positions relatives entre la gaine et le nez d'engainage, ces deux figures correspondant respectivement aux positions initiale et finale de l'étape représentée à la figure 6,
- la figure 13 est une vue similaire à celle de la figure 6 pour un troisième mode de réalisation d'un ensemble de gainage selon l'invention,
- la figure 14a est une vue en perspective d'un manchon selon la présente invention,
- la figure 14b est une vue en coupe longitudinale de la figure 14a.

### EXPOSÉ DÉTAILLÉ DE MODES DE RÉALISATION PARTICULIERS

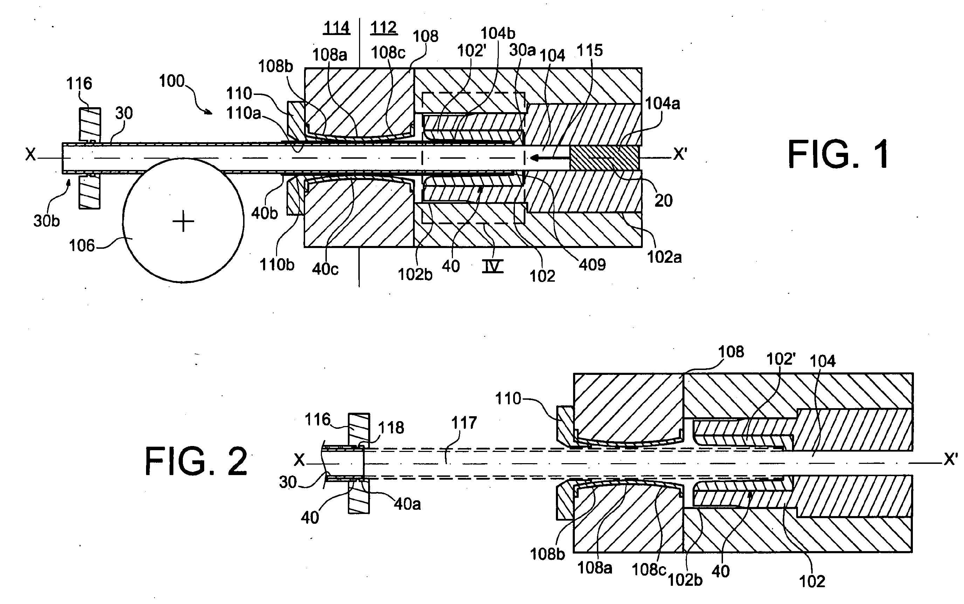

Si l'on se réfère à la figure 1, un dispositif de fabrication 100 est illustré dans une situation préalable à la formation d'un crayon.

En effet, des pastilles 20 de combustible sont disposées dans l'alignement d'un axe longitudinal (X, X') autour duquel est également placée une gaine 30 creuse destinée à contenir une pile de pastilles 20 afin de former un crayon.

La gaine 30 s'étend entre une première extrémité 30a située à droite de la figure 1 et une deuxième extrémité 30b située à gauche de la figure 1.

Un manchon 40 recouvre une zone d'extrémité de la gaine 30 qui contient la première extrémité 30a.

La gaine 30 et le manchon 40 sont de symétrie de révolution autour de l'axe (X, X').

La gaine 30 est de préférence formée d'un tube métallique, par exemple, un alliage de zirconium (Zircaloy).

Le manchon 40 constitue un élément de protection à usage unique de la gaine 30, celui-ci est par exemple en élastomère relativement rigide.

Afin de minimiser la quantité de déchets, on cherchera à utiliser un manchon 40 présentant une longueur restreinte et une épaisseur minimale.

Le manchon 40 est monté sur la zone d'extrémité de la gaine 30, en dehors de l'ensemble de gainage 100 illustré à la figure 1. Cette opération peut être réalisée de manière manuelle en dehors d'une enceinte, telle qu'une boîte à gants dans laquelle les pastilles de combustible et les crayons formés ultérieurement seront maintenus.

Le montage du manchon 40 sur la gaine 30 peut tout autant être réalisé de manière automatique à l'intérieur ou à l'extérieur de la boîte à gants.

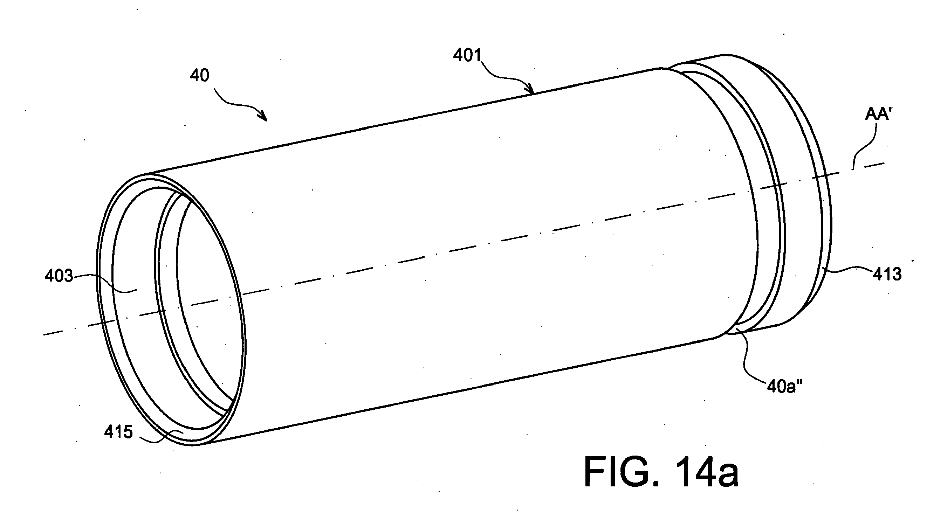

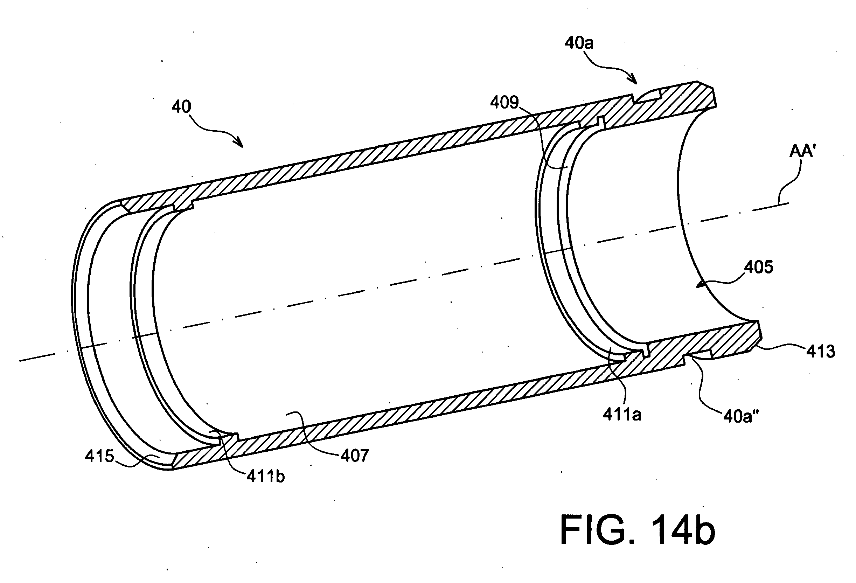

Le manchon 40 de protection représenté sur les figures 14a et 14b comporte un corps 401 en forme de cylindre régulier, d'axe A-A', et un passage central 403 également d'axe A-A'. Le passage comporte une première partie de plus petit diamètre 405 et une deuxième partie de plus grand diamètre 407, se raccordant par un épaulement 409. L'épaulement 409 est destiné à venir en appui contre l'extrémité 30a de la gaine 30, de manière à isoler celle-ci des débris provenant des pastilles lors de leur chargement dans la gaine.

Dans l'exemple représenté et de manière avantageuse, la deuxième partie de plus grand diamètre 407 a un diamètre supérieur au diamètre extérieur de la gaine et comporte des bourrelets 411 annulaires en saillie de la paroi intérieure de ladite deuxième partie. Le bourrelet 411b est apte à venir en contact étanche avec la gaine, pour former une barrière contre la contamination issue du passage des pastilles, et assure le maintien par expansion élastique du manchon sur la gaine. Le bourrelet 411b guide le manchon sur la gaine.

Le manchon peut comporter plusieurs bourrelets 411.

Dans l'exemple représenté, le manchon comporte deux bourrelets, mais un manchon muni d'un ou de plus de deux bourrelets ne sort pas du cadre de la présente invention.

Dans l'exemple représenté, les bourrelets ont une section sensiblement rectangulaire, une section en sapin ou toute autre forme peut également convenir.

En outre, le manchon peut comporter une seconde partie de diamètre intérieur sensiblement inférieure au diamètre de la gaine.

De plus, la première extrémité 40a du manchon comporte avantageusement sur son diamètre extérieur un chanfrein 413 de manière à faciliter son insertion dans un nez d'engainage.

L'extrémité libre de la partie de plus grand diamètre 407 comporte avantageusement un chanfrein 415 sur son diamètre intérieur pour faciliter l'insertion de la gaine 30 dans le manchon 40.

En référence à la figure 1, le dispositif d'engainage 100 comporte un nez d'engainage 102 s'étendant de manière longitudinale le long et autour de l'axe (X, X') entre une première extrémité 102a et une deuxième extrémité 102b. Le nez d'engainage 102 est traversé par un passage 104 s'étendant depuis la première extrémité 102a jusqu'à la deuxième extrémité 102b. Le diamètre de ce passage 104 est prévu pour permettre l'avancée des pastilles 20 arrivant en lots depuis la première extrémité 102a, ces pastilles 20 étant poussées au moyen d'un fleuret (non représenté) en direction de la deuxième extrémité 102b.

Sur la figure 1, un lot de pastilles 20 est logé à l'intérieur du passage 104 du côté amont 104a situé à droite de la figure 1. Du côté amont 104a, le passage 104 est cylindrique de section circulaire et du côté aval 104b, le passage 104 présente une forme de tronc de cône légèrement évasé qui présente un diamètre de plus en plus grand en direction de la deuxième extrémité 102b du nez d'engainage.

Cette forme évasée va faciliter l'entrée, le positionnement et le centrage de la première extrémité 30a de la gaine 30 à l'intérieur du côté aval 104b du passage 104.

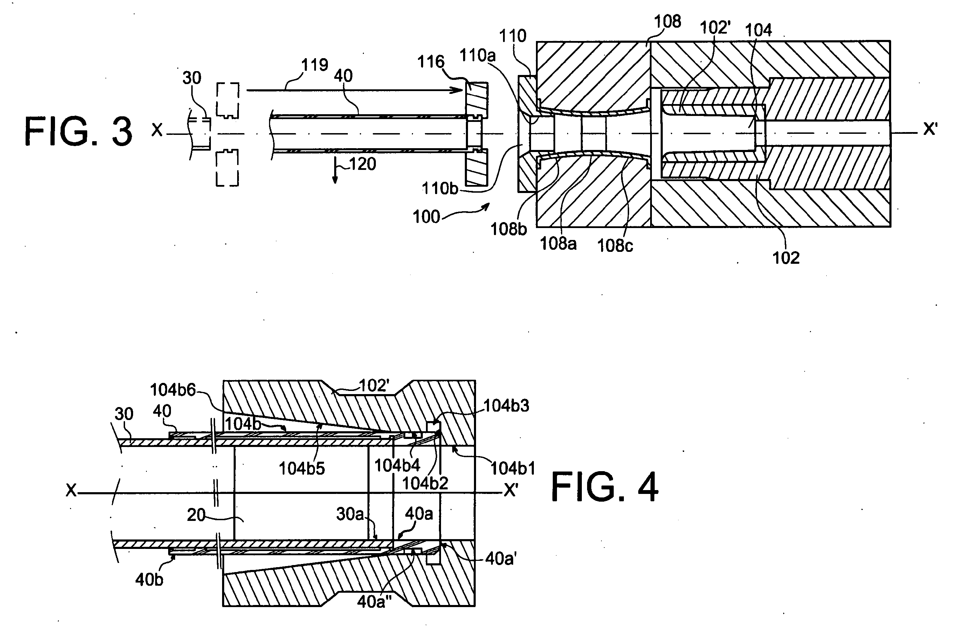

Au niveau du côté aval 104b du passage 104, le nez d'engainage 102 comporte une pièce interne 102' illustrée de manière agrandie sur la figure 4.

Si l'on se reporte à la figure 4, cette pièce interne 102' entoure le côté aval 104b du passage 104 depuis une première extrémité 104b1, présentant une section circulaire de diamètre identique et aligné avec le diamètre du passage 104 au niveau du côté amont 104a jusqu'à la deuxième extrémité 104b6 du côté aval 104b. Cette deuxième extrémité 104b6 est de section circulaire et présente un diamètre plus grand que le diamètre du côté amont 104a du passage 104, et est coaxiale à celui-ci.

Entre la première extrémité 104b1 et la deuxième extrémité 104b6 du côté aval 104b, le passage 104 comporte successivement un épaulement rentrant 104b2 selon une direction perpendiculaire à l'axe (X,X'), une gorge annulaire 104b3 ouverte sur l'épaulement rentrant 104b2, un tronçon circulaire 104b4 présentant un diamètre plus important que la première extrémité 104b1, et, sur une majeure partie de la longueur de la pièce interne 102, un tronçon tronconique 104b5 allant en s'évasant depuis le diamètre du tronçon circulaire 104b4 jusqu'à la deuxième extrémité 104b6.

Comme on peut le voir également sur la figure 4, la gaine 30 tubulaire recouverte du manchon 40, présente un diamètre externe sensiblement égal au diamètre du tronçon circulaire 104b4.

En outre, comme il apparaît sur la figure 4, la première extrémité 40a du manchon 40 dépasse au delà de la première extrémité 30a de la gaine 30. Plus exactement, la première extrémité 40a du manchon 40 présente une épaisseur plus importante correspondant à la somme des épaisseurs de la gaine 30 et de la deuxième extrémité 40b du manchon 40. Cette première extrémité 40a du manchon 40 s'étend sensiblement le long du tronçon circulaire 104b4 et de la gorge annulaire 104b3. La face 40a' de la première extrémité 40a du manchon 40 tournée en direction du côté amont 104a du passage 104 vient en butée contre l'épaulement rentrant 104b2 : dans cette position, comme il apparaît sur la figure 4, la paroi circulaire de la première extrémité du côté aval 104b, le diamètre interne de la première extrémité 40a du manchon 40 et le diamètre interne de la première extrémité 30a de la gaine 30 sont sensiblement alignés de manière à réduire les risques d'accrochage des pastilles lors des opérations de transfert de pastilles.

Dans la positon précitée telle que représentée sur la figure 4, la gaine 30 recouverte du manchon 40 est accostée dans le passage 104 du nez d'engainage 102.

Si l'on se réfère à nouveau à la figure 1, la gaine 30 revêtue du manchon a été amenée jusqu'à la position accostée illustrée à la figure 4 au moyen d'un galet 106 qui est escamotable.

Entre la deuxième extrémité 102b du nez d'engainage 102 et la deuxième extrémité 40b du manchon 40, est disposé un joint gonflable 108 annulaire entourant, avec contact serré et étanche, un tronçon de démarcation 40c du manchon 40.

Plus précisément, le joint 108 comporte un tronçon central 108a et deux tronçons d'extrémité 108b et 108c. Le tronçon central 108a délimite un passage cylindrique de section circulaire qui vient en contact étanche contre le tronçon de démarcation 40c qui est sensiblement de même longueur.

Les deux tronçons d'extrémité 108b et 108c délimitent un passage de forme tronconique allant en s'évasant depuis le tronçon central 108a. Un système d'arrivée d'air sous pression (non représenté) permet le gonflage du joint 108 de sorte que lorsque le joint 108 est sous pression, c'est-à-dire dans une position active, le tronçon central 108a est en contact étanche avec la face externe du tronçon de démarcation 40c.

Cette position active est mise en oeuvre avant l'arrivée des pastilles 20 dans le nez d'engainage et on désactive le joint 108 par évacuation de l'air sous pression à la fin du remplissage de la gaine 30 (cette position est représentée en traits mixtes sur la figure 2).

Ce joint gonflable 108 est précédé, du côté par lequel la gaine 30 arrive (à gauche sur la figure 1), d'un guide annulaire 110 présentant une première extrémité 110a, munie d'un passage circulaire et présentant une faible épaisseur de manière à pouvoir s'insérer dans le passage du joint gonflable. La deuxième extrémité 110b du guide annulaire 110 présente un passage en forme de tronc de cône allant en s'agrandissant en direction opposée au nez de façon à former un guide d'entrée pour la gaine 30 revêtue du manchon 40.

Le guide 110 et le joint gonflable 108 séparent une zone 112 susceptible d'être contaminée recevant les pastilles 20 de combustible (à droite sur la figure 1) d'une zone 114 non contaminée par les pastilles 20. Le manchon 40 présente une longueur telle qu'il s'étend depuis l'épaulement rentrant 104b2 (voir figure 4) au moins jusqu'à la deuxième extrémité 110b du guide annulaire 110. Dans le cas illustré, la deuxième extrémité 40b du manchon dépasse de cette deuxième extrémité 110b du guide annulaire 110.

La zone susceptible d'être contaminée 112, sera dénommée « zone amont », tandis que la zone non contaminée 114 sera dénommée « zone aval », ces zones 112 et 114 étant séparées l'une de l'autre, en direction longitudinale selon l'axe (X, X') par le tronçon central 108a du joint gonflable.

Le dispositif pour la fabrication de crayons comprend également des moyens d'alimentation (non illustrés) aptes à amener les colonnes de pastilles de combustible 20 dans cette zone amont 112.

A partir de la situation représentée à la figure 1, les pastilles 20 sont introduites dans le côté amont 104a du passage 104 du nez d'engainage, puis les pastilles 20 sont poussées (voir la flèche 115 de la figure 1) à l'intérieur de la gaine 30. De cette façon, plusieurs colonnes de pastilles 20 sont mises bout à bout à l'intérieur de la gaine 30 de façon à former un crayon. Le bouchonnage ou fermeture étanche de ce crayon est non décrit.

La position de la figure 1 est illustrée, en pointillés sur la figure 2. Dans la représentation de la figure 2, le galet 106 est escamoté, c'est-à-dire qu'il est écarté afin d'éviter sa contamination éventuelle.

La deuxième extrémité 30b de la gaine 30 est saisie par une pince de manutention (non représentée). Ensuite, la gaine 30 est écartée du nez d'engainage 102; du joint 108 et du guide 110 (voir la flèche 117 sur la figure 2) jusqu'à aboutir à la position écartée de la gaine 30 qui est illustrée en traits pleins sur la figure 2.

Dans cette position écartée, une pince 116 est ouverte et placée autour de la première extrémité 40a du manchon 40, cette pince 116 est ensuite refermée autour de cette première extrémité 40a.

Le contour intérieur de la pince 116 présente une complémentarité de forme avec le contour extérieur de la première extrémité 40a du manchon 40 (voir figures 14a et 14b). En particulier, la pince 116 comporte une nervure 118 pouvant venir se loger dans une rainure correspondante 40a", ou gorge avantageusement annulaire de la face externe de la première extrémité 40a du manchon 40.

La nervure 118 est annulaire ou non. D'une manière plus générale, la pince 116 est munie d'au moins une saillie radiale destinée à coopérer avec la rainure 40a" pour retenir le manchon 40 et le séparer par traction de la gaine 30, elle-même retenue par la pince de manutention précitée.

De cette position illustrée sur la figure 2, dans laquelle la pince 116 est serrée autour de la première extrémité 40a du manchon 40 (situation en pointillés sur la figure 3), on fait avancer la pince 116 en direction du nez d'engainage 102 (voir flèche 119) : le manchon 40 ayant servi pendant le remplissage de la gaine 30 par les pastilles 20, est maintenant séparé de la gaine 30.

Après cette opération de séparation, on ouvre la pince de préhension 116, de sorte que le manchon 40 tombe (voir flèche 120) de manière gravitaire dans un réceptacle à déchets (non représenté) prévu à cet effet.

La pince 116 ouverte retournera dans sa position initiale représentée à la figure 1 dans l'attente de l'arrivée d'une autre gaine 30.

Ainsi, on comprend que toute la partie de la gaine 30 située dans la zone amont 112 a été protégée de toute contamination par les pastilles 20 au moyen du manchon 40 qui est ensuite séparé de la gaine 30 puis évacué : on aboutit ainsi de manière simple et efficace à protéger de toute pollution et/ou de toute contamination la face extérieure de la gaine 30 du crayon de combustible lors de l'opération d'engainage.

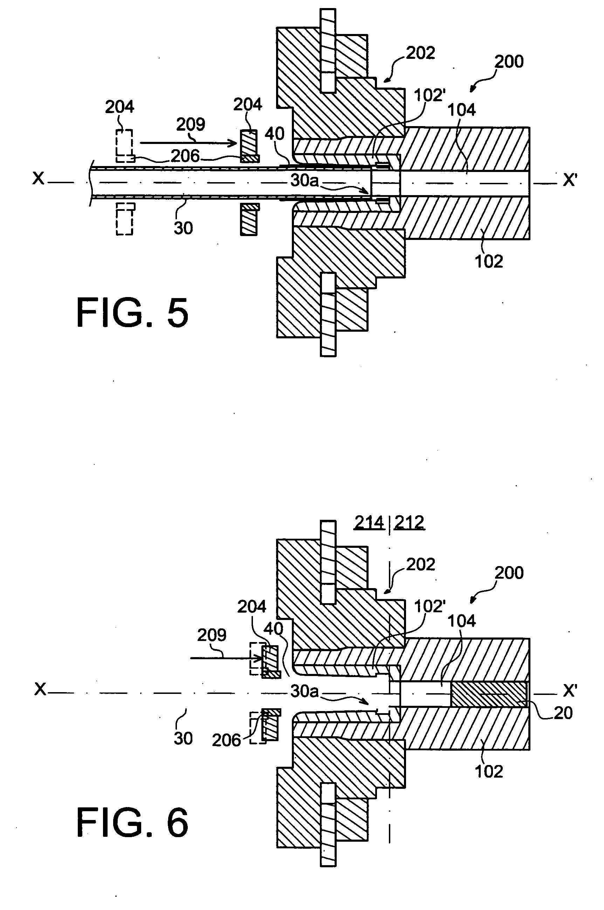

On se reportera maintenant aux figures 5 à 10 illustrant un deuxième mode de réalisation du dispositif portant la référence générale 200. Les éléments communs au premier mode de réalisation 100 et au deuxième mode de réalisation 200 de l'ensemble de gainage portent des références numériques inchangées par rapport à la description qui précède du premier mode de réalisation.

Le dispositif 200 selon le deuxième mode de réalisation comporte un nez d'engainage 102 qui est entouré de différents éléments de montage désignés d'une manière générique par la référence 202.

Des éléments de montage similaires peuvent être montés autour du nez d'engainage 102 dans le cas du premier mode de réalisation du dispositif pour la fabrication de crayon 100 même s'ils ne sont pas représentés sur les figures 1 à 3.

Le dispositif 200 ne présente pas le joint 108, le guide 110 et la pince 116 du premier mode de réalisation. La gaine 30 revêtue du manchon 40 est avancée dans le nez d'engainage 102 au moyen du galet d'entraînement 106 et la position accostée est atteinte au moyen d'un élément poussoir 204 comme il sera décrit ci-après en relation avec les figures 5 et 6.

L'élément formant poussoir 204 est formé de deux demi-coquilles susceptibles de venir enserrer au moins une partie du contour circulaire de la face externe de la gaine 30, une partie radialement interne 206 rigide en compression formant un contact étanche.

Cette partie radialement interne 206 de l'élément formant poussoir 204 peut être réalisée dans un matériau tel qu'un élastomère, ce qui permet d'éviter avantageusement tout risque de rayure de la gaine.

Lorsque le galet d'entraînement 106 a amené la première extrémité 30a de la gaine 30 à l'intérieur du passage 104, l'élément formant poussoir 204 qui est ouvert, passe d'une position arrière illustrée en pointillés sur la figure 5 à une position avant illustrée en traits pleins sur la figure 5 en se rapprochant du manchon 40 selon la direction de la flèche 209.

L'élément formant poussoir 204 est ensuite refermé de manière serrée autour de la face externe de la gaine 30 (étape illustrée en pointillés sur la figure 6).

L'élément poussoir 204 est ensuite avancé (flèche 209 sur la figure 6) le long de la gaine 30 jusqu'à venir buter contre la deuxième extrémité 40b du manchon 40.

L'élément formant poussoir 204 continuant à avancer selon la direction de la flèche 209 en étant serré autour de la gaine 30, on aboutit à la disposition de la figure 4 dans laquelle la gaine 30 est accostée au fond du nez d'engainage 102.

C'est dans cette position accostée illustrée à la figure 6 et correspondant à la position de la figure 1 du premier mode de réalisation, qu'est effectué le remplissage de la gaine 30 par les pastilles de combustible 20 pour la formation d'un crayon.

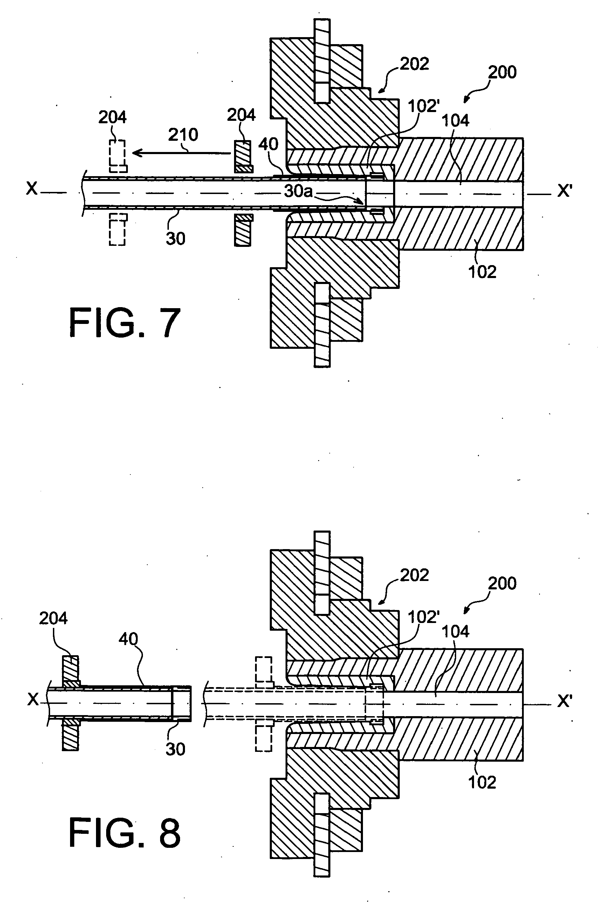

Après que cette opération d'engainage des pastilles ait été réalisée, comme il est représenté sur la figure 7 en pointillés, l'élément formant poussoir 204 est ouvert en s'écartant radialement de la gaine 30 puis il est écarté du nez 102 en direction longitudinale dans le sens de la flèche 210.

Depuis la position de la gaine de la figure 7 ou celle représentée en pointillés sur la figure 8, la séparation entre la gaine 30 et le nez d'engainage 102 se déroule de la manière similaire à celle décrite en relation avec la figure 2 au moyen d'une pince de manutention du poste de bouchonnage pour aboutir à la position illustrée en traits pleins sur la figure 8.

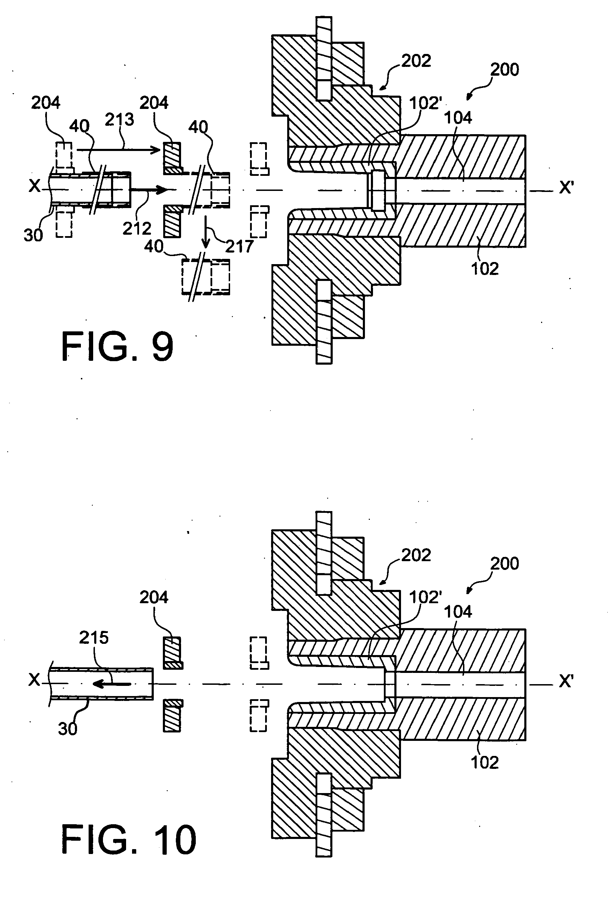

Ensuite, on referme de manière serrée l'élément formant poussoir 204 autour de la gaine 30, l'élément formant poussoir 204 est avancé en direction du nez d'engainage 102 (voir flèche 213 sur la figure 9) en retirant ainsi le manchon 40 de la gaine 30 qui reste en position écartée. Le déplacement du manchon 40 conduit à sa séparation totale (position illustrée en pointillés sur la figure 9) de la gaine 30 pour finir par une chute par gravité (flèche 217) du manchon 40 en direction d'un réceptacle à déchets déjà mentionné.

L'élément formant poussoir 204 est ensuite ouvert radialement (voir figure 10) et la gaine 30 remplie de pastilles de combustible 20, est séparée du dispositif 200 (voir flèche 215) en direction du poste de bouchonnage.

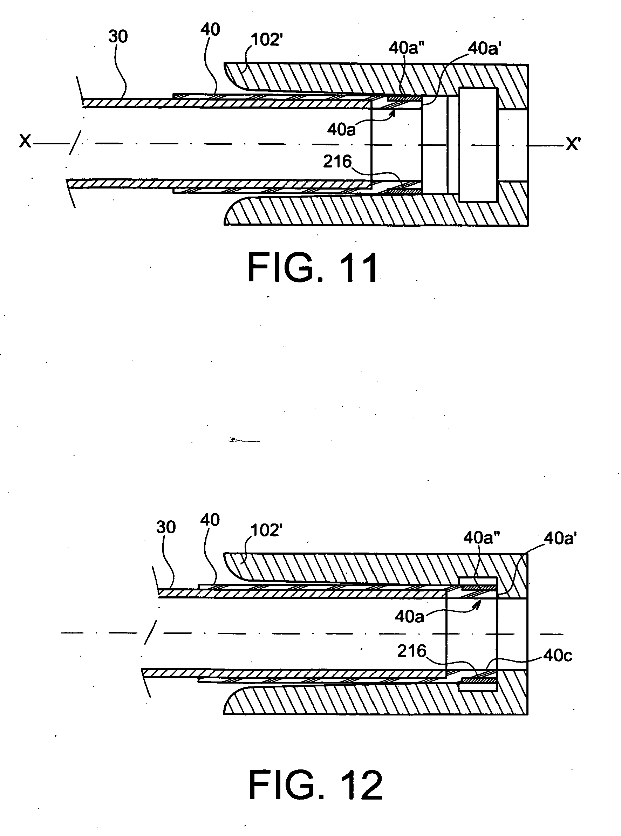

Sur les figures 11 et 12 sont représentées, d'une manière agrandie, certaines positions relatives entre la gaine 30 revêtue du manchon 40 et la pièce interne 102' du nez d'engainage 102.

Plus précisément, la figure 11 correspond à la position avant de la figure 5 et la figure 12 correspond à la position accostée illustrée à la figure 6 et qui a été illustrée à la figure 4 en relation avec le premier mode de réalisation.

Seule la première extrémité 40a du manchon 40 a été modifiée par rapport au cas de figure du premier mode de réalisation : la rainure 40a" s'étend jusqu'à la face 40a' et elle est équipée d'un joint en élastomère annulaire 216 destiné à limiter les risques de contamination du passage 104 au niveau de la pièce interne 102 du nez d'engainage 102, lorsque les pastilles de combustible 20 sont disposées à l'intérieur de la gaine 30.

Dans le deuxième mode de réalisation, le joint 216 délimite (voir figure 6) la zone amont 212 susceptible d'être contaminée de la zone aval 214 et l'élément pousseur 204 remplit la même fonction de manutention que la pince 116 du premier mode de réalisation.

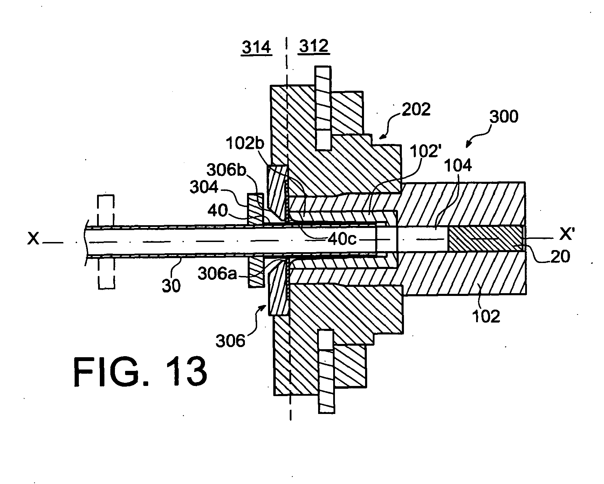

Le troisième mode de réalisation du dispositif de fabrication illustré en relation avec la figure 13 et portant la référence numérique 300 se distingue du deuxième mode de réalisation en ce que l'élément poussoir 204 est remplacé par un élément formant poussoir 304 et un joint à lèvres 306.

Dans ce cas, l'élément formant poussoir 304 ne comporte pas la partie radialement interne 206 en contact avec la face externe de la gaine 30 mais il est réalisé en une seule pièce.

Cet élément formant poussoir 304 est manoeuvré de manière tout à fait identique à l'élément poussoir 204 en conformité avec les figures 5 à 10.

Le joint à lèvre 306 est disposé de manière adjacente à la deuxième extrémité 102b du nez d'engainage avec une lèvre susceptible de venir en contact étanche et serré contre la face externe du manchon 40 à l'emplacement du tronçon de démarcation.

De préférence, comme il est illustré sur la figure 13, la lèvre 306a est disposée longitudinalement au plus près de la deuxième extrémité 102b du nez d'engainage au niveau d'une première extrémité du joint à lèvres 306.

Dans le cas du troisième mode de réalisation, c'est la lèvre 306a du joint à lèvre 306 qui sépare la zone amont 312 de la zone aval 314.

La deuxième extrémité 306b du joint à lèvres 306 présente une ouverture tronconique allant en s'évasant depuis la première extrémité 306a, afin de faciliter l'entrée de la gaine 30 en direction du nez d'engainage 102.

Pour ce qui concerne l'agencement relatif entre la première extrémité 40a du manchon et le côté aval 104b du passage, les figures 11 et 12 restent valables dans le cadre du troisième mode de réalisation sauf pour le joint 216 qui est alors facultatif.

Comme il ressort des trois modes de réalisation illustrés et décrits précédemment le manchon 40 dépasse sensiblement à droite, c'est-à-dire de la première extrémité 30a de la gaine 30.

## Revendications

1. Manchon de protection (40) pour gaine de combustible nucléaire, destiné à être interposé entre la gaine et un nez d'engainage d'un dispositif de fabrication de crayons de combustible nucléaire, ledit manchon comportant un corps (401) d'axe longitudinal (AA') muni d'un passage (403), au moins une partie dudit passage (403) étant apte à coopérer de manière étanche avec une paroi périphérique d'une gaine, le passage comportant une première partie (405) de plus petit diamètre et une deuxième partie de plus grand diamètre (407), au moins une partie de ladite deuxième partie (407) étant apte à coopérer de manière étanche avec la paroi périphérique de la gaine, lesdites première et deuxième parties se raccordant par un épaulement (409) destiné à protéger une face (30a) d'une extrémité (30) ouverte d'une gaine, le manchon étant d'un seul tenant et la première partie de plus petit diamètre ayant un diamètre sensiblement égal au diamètre intérieur du nez d'engainage.

2. Manchon selon la revendication 1, comportant également des moyens de préhension formés sur une paroi extérieure du manchon.

3. Manchon selon la revendication précédente dans lequel les moyens de préhension sont formés par une gorge (40a").

4. Manchon selon l'une des revendications 1 à 3, comportant à une extrémité du côté de la partie de plus petit diamètre, un décrochement muni d'un joint.

5. Manchon selon l'une quelconque des revendication 1 à 4, comportant des bourrelets (411) d'étanchéité en saillie d'une paroi interne de la deuxième partie de plus grand diamètre (407) et aptes à venir en contact étanche avec une paroi extérieure de la gaine (30).

6. Dispositif (100, 200, 300) de fabrication de crayons de combustible d'axe longitudinal (X, X'), à l'aide d' une gaine (30) et d' un manchon (40) de protection tubulaire selon l'une des revendications 1 à 5 comportant un passage muni d'un épaulement intérieur destiné à protéger une face de l'extrémité ouverte (30a) de la gaine, et de pastilles (20) de combustible comprenant :
- un nez d' engainage (102) traversé d'un passage (104) s'étendant entre un côté amont (104a) pour l'arrivée desdites pastilles (20) de combustible et un côté aval (104b), apte à recevoir l'extrémité de la gaine munie du manchon,
- des moyens de délimitation (108, 216, 306a) aptes coopérer avec le manchon pour séparer de manière étanche la zone aval (114, 214, 314) de la zone amont (112),
- des moyens d'alimentation aptes à amener lesdites pastilles (20) de combustible dans ladite zone amont (112, 212, 312),
- des moyens pour l'introduction desdites pastilles (20) de combustible dans ledit côté amont (104a) du passage (104) du nez d'engainage (102) et dans la gaine (30),
- des moyens d'entraînement (106) escamotables aptes à coopérer avec ladite gaine (30) pour permettre le mouvement de ladite gaine (30) dans ladite zone aval (114, 214, 314) en direction et/ou depuis ledit nez d'engainage (102) entre une position écartée dans laquelle la gaine (30) est en dehors dudit passage (104) et ladite position accostée,
- des moyens de retrait (116, 204, 304) dudit manchon (40) de ladite gaine (30).

7. Dispositif selon la revendication précédente, dans lequel, le côté aval (104b) du passage (104) du manchon (40) est conformé pour coopérer de manière à entourer une première extrémité 30a de ladite gaine (30), ladite première extrémité (30a) de la gaine (30) étant entourée par ledit manchon (40), ledit côté aval (104b) du passage (104) étant apte à venir en appui contre la face externe de la première extrémité (40a) dudit manchon (40) dans une position accostée.

8. Dispositif (100, 200, 300) selon la revendication 6 ou 7, dans lequel ledit nez d'engainage (102), et lesdits moyens de délimitation (108, 216, 306a) sont de symétrie de révolution autour de l'axe longitudinal (X, X').

9. Dispositif (100, 200, 300) selon l'une quelconque des revendications 6 à 8, comportant, en outre, des moyens de mise en place dudit manchon (40) autour de ladite gaine (30) sur un tronçon d'extrémité de ladite gaine (30) comprenant ladite première extrémité (30a).

10. Dispositif (100, 200, 300) selon l'une quelconque des revendications 6 à 9, dans lequel l'extrémité du passage (104) du nez d'engainage (102) située du côté aval (104b) dudit passage (104) présente une face interne en forme de tronc de cône allant en se rétrécissant en direction du côté amont (104a) dudit passage.

11. Dispositif (100, 300) selon l'une quelconque des revendications 6 à 10, comportant, en outre, des moyens de guidage (110, 306) situés en aval desdits moyens de délimitation (108, 216, 306a) et permettant d'orienter les mouvements de ladite gaine (30) par rapport audit côté aval (104b) du nez d' engainage.

12. Dispositif (100) selon l'une quelconque des revendications 6 à 11, dans lequel lesdits moyens de délimitation comprennent un joint annulaire gonflable (108) apte à entourer ledit tronçon de démarcation (40c) dudit manchon (40) et apte à venir en contact contre la face externe dudit tronçon de démarcation (40c) dans une position active.

13. Dispositif (100) selon l'une quelconque des revendications 6 à 12, dans lequel lesdits moyens de retrait comportent une pince de préhension (116) munie d'au moins deux parties aptes à enserrer ladite première extrémité (40a) du manchon (40) muni d'une gorge pratiquée dans sa paroi extérieure, et équipée d'au moins une saillie radiale (118) destinée à coopérer avec ladite gorge pour retenir ledit manchon (40) et le séparer de ladite gaine (30) par traction.

14. Dispositif (200, 300) selon l'une quelconque des revendications 6 à 12, **caractérisé en ce que** lesdits moyens de retrait comprennent au moins un élément formant poussoir (204, 304) susceptibles de venir entourer ladite gaine (30) sur au moins une partie de son contour derrière la deuxième extrémité (40b) dudit manchon (40), et apte à entraîner ledit manchon (40) par poussée en le séparant de ladite gaine (30) par glissement.

15. Dispositif (200) selon la revendication 6 à 11, dans lequel lesdits moyens de délimitation (216) comportent un joint annulaire logé dans une rainure annulaire (40a") située sur la face externe de la première extrémité (40a) du manchon (40).

16. Dispositif (300) selon l'une quelconque des revendications 6 à 11, dans lequel lesdits moyens de délimitation comprennent un joint à lèvre (306), ladite lèvre (306b) étant apte à entourer ledit tronçon de démarcation (40c) dudit manchon (40) et apte à venir en contact étanche contre la face externe dudit tronçon de démarcation (40c) dans une position serrée.

17. Procédé de fabrication de crayons de combustible **caractérisé en ce qu'**il comporte les étapes :
a) de mise en place d'un manchon selon l'une des revendications 1 à 5 sur une extrémité ouverte (30a) d'une gaine (30), ledit manchon comportant un passage muni d'un épaulement intérieur destiné à protéger une face de l'extrémité ouverte (30a) de la gaine (30),
b) d'insertion de l'extrémité de la gaine (30a) munie du manchon dans le nez d'engainage,
c) d'isolation d'un espace recevant des pastilles et d'un espace extérieur,
d) de remplissage de la gaine en pastilles,
e) d'interruption dudit remplissage lorsque la gaine contient un nombre déterminé de pastilles ;
f) de retrait de l'extrémité (30a) de la gaine du nez d'engainage,
g) d'ablation du manchon.

18. Procédé selon la revendication précédente, comportant également l'étape de mise en place d'un bouchon sur l'extrémité (30a) de la gaine.

19. Procédé de fabrication de crayon de combustible selon la revendication 17 ou 18, dans lequel, lors de l'étape b), on active des moyens d'entraînement (106) afin d'amener ladite gaine (30) vers ledit nez d'engainage (102) jusqu'à ce que la première extrémité (30a) de ladite gaine (30) accoste ledit nez d'engainage (102).

20. Procédé selon l'une quelconque des revendications 17 à 19, dans lequel lors de l'étape c), on active des moyens de délimitation (108, 216, 306a) pour qu'ils coopèrent de manière étanche avec toute la périphérie d'un tronçon de démarcation (40c) du manchon (40) pour séparer ladite zone amont (112, 212, 312) de ladite zone aval (114, 214, 314).

21. Procédé selon l'une quelconque des revendications 17 à 20, dans lequel lors de l'étape d), on active des moyens d'alimentation pour amener lesdites pastilles (20) de combustible dans ladite zone amont (112, 212, 312), et on active des moyens pour l'introduction desdites pastilles (20) de combustible dans le passage (104) dudit nez d'engainage (102) jusqu'à ce que la quantité désirée de pastilles (20) de combustible soit contenue dans ladite gaine (30).

22. Procédé selon la revendication 21, dans lequel lors de l'étape e), on désactive lesdits moyens d'alimentation et lesdits moyens pour l'introduction de pastille (20) de combustible.

23. Procédé selon la revendication 19, dans lequel lors de l'étape e), on active lesdits moyens d'entraînement (106) afin de séparer ladite gaine (30) dudit nez d'engainage (102) jusqu'à ce que ladite gaine (30) soit située dans ladite zone aval (114, 214, 314).

24. Procédé selon l'une quelconque des revendications 17 à 23, dans lequel lors de l'étape g), on active des moyens de retrait (116, 214, 314) afin de séparer ledit manchon (40) de ladite gaine (30), et on évacue ledit manchon (40).

## Claims

1. A protective sleeve (40) for nuclear fuel cladding, designed to be inserted between the cladding and a cladding nose of a device for producing nuclear fuel rods, said sleeve comprising a body (401) having a longitudinal axis (AA') provided with a passage (403), at least one part of said passage (403) being able to cooperate sealably with a peripheral wall of a cladding, the passage comprising a first part (405) of smaller diameter and a second part of larger diameter (407), at least one part of said second part (407) being able to cooperate sealably with the peripheral wall of the cladding, said first and second parts being connected to each other by a shoulder (409) designed to protect a surface (30a) of an open end (30) of the cladding, the sleeve being in one piece and the first part of smaller diameter having a diameter substantially equal to the internal diameter of the cladding nose.

2. The sleeve according to claim 1, also comprising gripping means formed on the outer wall of the sleeve.

3. The sleeve according to the preceding claim in which the gripping means are formed by a groove (40a'').

4. The sleeve according to one of claims 1 to 3, comprising at one end of the side of the part having the smaller diameter, a recess provided with a seal.

5. The sleeve according to one of claims 1 to 4, comprising sealing flanges (411) protruding from an inner wall of the second part having a larger diameter (407) and able to come into sealable contact with an outer wall of the cladding (30).

6. A device (100, 200, 300) for producing fuel rods having a longitudinal axis (X, X'), with the help of a cladding (30) and a tubular protective sleeve (40) according to one of the claims 1 to 5 comprising a passage provided with an inner shoulder designed to protect a surface of the open end (30a) of the cladding, and fuel pellets (20) comprising:
- a cladding nose (102) with a through passage (104) extending between an upstream side (104a) for arrival of said fuel pellets (20) and a downstream side (104b), able to receive the end of the cladding provided with the sleeve,
- boundary means (108, 216, 306a) able to cooperate with the sleeve to sealably separate the downstream area (114, 214, 314) from the upstream area (112),
- supply means able to bring said fuel pellets (20) into said upstream area (112, 212, 312),
- means for introducing said fuel pellets (20) into the upstream side (104a) of the passage (104) of the cladding nose (102) and into the cladding (30),
- retractable drive means (106) able to cooperate with said cladding (30) to allow movement of said cladding (30) in said downstream area (114, 214, 314) in the direction of and/or from said cladding nose (102) between a separated position in which the cladding (30) is outside said passage (104) and said side-by-side position,
- removal means (116, 204, 304) for removing the sleeve (40) from the cladding (30).

7. The device according to the preceding claim, in which the downstream side (104b) of the passage (104) of the sleeve (40) is conformed to cooperate so as to surround a first end (30a) of said cladding (30), said first end (30a) of the cladding (30) being surrounded by the sleeve (40), the downstream side (104b) of the passage (104) being able to bear against the external surface of the first end (40a) of said sleeve (40) in a side-by-side position.

8. The device (100, 200, 300) according to claim 6 or 7, in which said cladding nose (102) and said boundary means (108, 216, 306a) are revolutionally symmetrical around the longitudinal axis (X, X').

9. The device (100, 200, 300) according to any of claims 6 to 8, also comprising means for placing said sleeve (40) around said cladding (30) on an end section of the cladding (30) comprising the first end (30a).

10. The device (100, 200, 300) according to any of claims 6 to 9, in which the end of the passage (104) of the cladding nose (102) located from the downstream side (104b) of the passage (104) has an internal surface in the shape of a truncated cone narrowing in the direction of the upstream side (104a) of said passage.

11. The device (100, 300) according to any of claims 6 to 10, furthermore comprising guide means (110, 306) located downstream from said boundary means (108, 216, 306a) and making it possible to orient the movements of said cladding (30) with respect to the downstream side (104b) of the cladding nose.

12. The device (100) according to any of claims 6 to 11, in which the boundary means comprise an inflatable annular seal (108) able to surround the demarcation section (40c) of the sleeve (40) and able to come into contact against the external surface of said demarcation section (40c) in an active position.

13. The device (100) according to one of claims 6 to 12, in which the removal means comprise a gripper (116) provided with at least two parts able to grip said first end (40a) of the sleeve (40) provided with a groove formed in its external wall, and equipped with at least one radial protrusion (118) designed to cooperate with said groove to hold said sleeve (40) and separate it from the cladding (30) via traction.

14. The device (200, 300) according to one of claims 6 to 12, said removal means comprising at least one tappet element (204, 304) able to surround said cladding (30) over at least one part of its contour behind the second end (40b) of said sleeve (40), and able to drive said sleeve (40) by pushing while separating it from the cladding (30) via sliding.

15. The device (200) according to claim 6 to 11, in which the boundary means (216) comprise an annular seal housed in an annular groove (40a") located on the external surface of the first end (40a) of the sleeve (40).

16. The device (300) according to one of claims 6 to 11, in which the boundary means comprise a lip seal (306), said lip (306b) being able to surround the demarcation section (40c) of the sleeve (40) and able to come into sealable contact against the external surface of the demarcation section (40c) in a tightened position.

17. A method for producing fuel rods **characterized in that** it comprises the steps of:
a) placing a sleeve according to pne of claims 1 to 5 on an open end (30a) of a cladding (30), said sleeve comprising a passage provided with internal shoulder designed to protect a surface of the open end (30a) of the cladding (30),
b) inserting the end of the cladding (30a) provided with the sleeve in the cladding nose,
c) isolating a space receiving pellets and an outer space,
d) filling the cladding with pellets,
e) interrupting said filling when the cladding contains a determined number of pellets;
f) removing the end (30a) from the cladding of the cladding nose,
g) ablating the sleeve.

18. The method according to the preceding claim, also comprising the step of placing a cap in the end (30a) of the cladding.

19. The method for producing fuel rods according to claim 17 or 18, in which, during step b), drive means (106) are activated in order to bring said cladding (30) towards said cladding nose (102) until the first end (30a) of said cladding (30) comes alongside said cladding nose (102).

20. The method according to any of claims 17 to 19, in which during step c), boundary means (108, 216, 306a) are activated so that they cooperate sealably with the entire periphery of a demarcation section (40c) of the sleeve (40) to separate the upstream area (112, 212, 312) from the downstream area (114, 214, 314).

21. The method according to any of claims 17 to 20, in which during step d), supply means are activated to bring said fuel pellets (20) into said upstream area (112, 212, 312), and means are activated for introducing said fuel pellets (20) into the passage (104) of said cladding nose (102) until the desired quantity of fuel pellets (20) is contained in said cladding (30).

22. The method according to claim 21, in which during step e), the supply means and the means for introducing fuel pellets (20) are deactivated.

23. The method according to claim 19, in which during step e), the drive means (106) are activated in order to separate the cladding (30) from the cladding nose (102) until said cladding (30) is located in the downstream area (114, 214, 314).

24. The method according to any of claims 17 to 23, in which during step g), removal means (116, 214, 314) are activated in order to separate the sleeve (40) from the cladding (30), and said sleeve (40) is discharged.

## Patentansprüche

1. Schutzhülse (40) für eine Kernbrennstoffhülle, dazu bestimmt, zwischen der Hülle und einer Umhüllungsnase einer Vorrichtung zur Herstellung von Kernbrennstäben angeordnet zu werden, wobei die Schutzhülse ein Gehäuse (401) mit einer Längsachse (AA') aufweist, das mit einem Durchgang (403) versehen ist, wobei mindestens ein Teil des Durchgangs (403) geeignet ist, mit einer Umfangswand einer Hülle dichtend zusammenzuwirken, wobei der Durchgang einen ersten Teil (405) mit kleinerem Durchmesser und einen zweiten Teil mit größerem Durchmesser (407) aufweist, wobei mindestens ein Teil des zweiten Teils (407) geeignet ist, mit der Umfangswand der Hülle dichtend zusammenzuwirken, wobei der erste und zweite Teil sich über eine Schulter (409) aneinander anschließen, die dazu bestimmt ist, eine Stirnseite (30a) eines offenen Endes (30) einer Hülle zu schützen, wobei die Schutzhülse aus einem Stück besteht und der erste Teil mit kleineren Durchmesser einen Durchmesser aufweist, der im Wesentlichen gleich dem Innendurchmesser der Umhüllungsnase ist.

2. Schutzhülse nach Anspruch 1, welche außerdem Greifmittel aufweist, die an einer Außenwand der Schutzhülse ausgebildet sind.

3. Schutzhülse nach dem vorhergehenden Anspruch, wobei die Greifmittel von einer Nut (40a") gebildet werden.

4. Schutzhülse nach einem der Ansprüche 1 bis 3, welche an einem Ende der Seite des Teils mit kleinerem Durchmesser einen Absatz aufweist, der mit einer Dichtung versehen ist.

5. Schutzhülse nach einem der Ansprüche 1 bis 4, welche Dichtwülste (411) aufweist, die vorspringend an einer Innenwand des zweiten Teils mit größerem Durchmesser (407) angeordnet sind und geeignet sind, mit einer Außenwand der Hülle (30) in dichten Kontakt zu kommen.

6. Vorrichtung (100, 200, 300) zur Herstellung von Brennstäben mit einer Längsachse (X, X'), mit Hilfe einer Hülle (30) und einer rohrförmigen Schutzhülse (40) nach einem der Ansprüche 1 bis 5, welche einen Durchgang aufweist, der mit einer inneren Schulter versehen ist, die dazu bestimmt ist, eine Stirnseite des offenen Endes (30a) der Hülle zu schützen, und von Brennstofftabletten (20), umfassend:
- eine Umhüllungsnase (102), die von einem Durchgang (104) durchquert wird, der sich zwischen einer stromaufwärtigen Seite (104a) für die Zuführung der Brennstofftabletten (20) und einer stromabwärtigen Seite (104b), die geeignet ist, das Ende der mit der Schutzhülse versehenen Hülle aufzunehmen, erstreckt,
- Begrenzungsmittel (108, 216, 306a), die geeignet sind, mit der Schutzhülse zusammenzuwirken, um den stromabwärtigen Bereich (114, 214, 314) dichtend von dem stromaufwärtigen Bereich (112) zu trennen,
- Zuführungsmittel, die geeignet sind, die Brennstofftabletten (20) in den stromaufwärtigen Bereich (112, 212, 312) einzuführen,
- Mittel zur Einführung der Brennstofftabletten (20) in die stromaufwärtige Seite (104a) des Durchgangs (104) der Umhüllungsnase (102) und in die Hülle (30),
- einziehbare Antriebsmittel (106), die geeignet sind, mit der Hülle (30) zusammenzuwirken, um die Bewegung der Hülle (30) in dem stromabwärtigen Bereich (114, 214, 314) in Richtung der Umhüllungsnase (102) und/oder von dieser weg zwischen einer entfernten Position, in welcher sich die Hülle (30) außerhalb des Durchgangs (104) befindet, und der anliegenden Position zu ermöglichen,
- Mittel zum Entfernen (116, 204, 304) der Schutzhülse (40) von der Hülle (30).

7. Vorrichtung nach dem vorhergehenden Anspruch, wobei die stromabwärtige Seite (104b) des Durchgangs (104) der Schutzhülse (40) dazu ausgebildet ist, derart zusammenzuwirken, dass sie ein erstes Ende (30a) der Hülle (30) umgibt, wobei das erste Ende (30a) der Hülle (30) von der Schutzhülse (40) umgeben ist, wobei die stromabwärtige Seite (104b) des Durchgangs (104) geeignet ist, an der Außenseite des ersten Endes (40a) der Schutzhülse (40) in einer anliegenden Position zur Anlage zu kommen.

8. Vorrichtung (100, 200, 300) nach Anspruch 6 oder 7, wobei die Umhüllungsnase (102) und die Begrenzungsmittel (108, 216, 306a) rotationssymmetrisch um die Längsachse (X, X') sind.

9. Vorrichtung (100, 200, 300) nach einem der Ansprüche 6 bis 8, welche außerdem Mittel zur Anbringung der Schutzhülse (40) um die Hülle (30) herum auf einem Endabschnitt der Hülle (30), der das erste Ende (30a) umfasst, aufweist.

10. Vorrichtung (100, 200, 300) nach einem der Ansprüche 6 bis 9, bei welcher das Ende des Durchgangs (104) der Umhüllungsnase (102), das sich auf der stromabwärtigen Seite (104b) des Durchgangs (104) befindet, eine Innenseite von der Form eines Kegelstumpfes aufweist, der sich in Richtung der stromaufwärtigen Seite (104a) des Durchgangs verjüngt.

11. Vorrichtung (100, 300) nach einem der Ansprüche 6 bis 10, welche außerdem Führungsmittel (110, 306) aufweist, die sich stromabwärts der Begrenzungsmittel (108, 216, 306a) befinden und es ermöglichen, die Bewegungen der Hülle (30) bezüglich der stromabwärtigen Seite (104b) der Umhüllungsnase zu orientieren.

12. Vorrichtung (100) nach einem der Ansprüche 6 bis 11, wobei die Begrenzungsmittel eine aufblasbare Ringdichtung (108) umfassen, die geeignet ist, den Begrenzungsabschnitt (40c) der Schutzhülse (40) zu umschließen, und geeignet ist, in einer aktiven Position mit der Außenseite des Begrenzungsabschnitts (40c) in Kontakt zu kommen.

13. Vorrichtung (100) nach einem der Ansprüche 6 bis 12, wobei die Mittel zum Entfernen eine Greifzange (116) aufweisen, die mit mindestens zwei Teilen versehen ist, die geeignet sind, das erste Ende (40a) der mit einer in ihrer Außenwand hergestellten Nut versehenen Schutzhülse (40) zu umschließen, und die mit mindestens einem radialen Vorsprung (118) ausgestattet ist, der dazu bestimmt ist, mit der Nut zusammenzuwirken, um die Schutzhülse (40) zu halten und sie durch Zug von der Hülle (30) zu trennen.

14. Vorrichtung (200, 300) nach einem der Ansprüche 6 bis 12, **dadurch gekennzeichnet, dass** die Mittel zum Entfernen mindestens ein einen Stößel bildendes Element (204, 304) umfassen, das in der Lage ist, die Hülle (30) auf mindestens einem Teil ihres Umfangs hinter dem zweiten Ende (40b) der Schutzhülse (40) zu umschließen, und geeignet ist, die Schutzhülse (40) durch Schub zu bewegen und sie dabei gleitend von der Hülse (30) zu trennen.

15. Vorrichtung (200) nach einem der Ansprüche 6 bis 11, wobei die Begrenzungsmittel (216) eine Ringdichtung aufweisen, die in eine Ringnut (40a") eingesetzt ist, die sich an der Außenseite des ersten Endes (40a) der Schutzhülse (40) befindet.

16. Vorrichtung (300) nach einem der Ansprüche 6 bis 11, wobei die Begrenzungsmittel eine Lippendichtung (306) umfassen, wobei die Lippe (306b) geeignet ist, den Begrenzungsabschnitt (40c) der Schutzhülse (40) zu umschließen, und geeignet ist, in einer geschlossenen Position mit der Außenseite des Begrenzungsabschnitts (40c) in dichten Kontakt zu kommen.

17. Verfahren zur Herstellung von Brennstäben, **dadurch gekennzeichnet, dass** es folgende Schritte aufweist:
a) Anbringen einer Schutzhülse nach einem der Ansprüche 1 bis 5 auf einem offenen Ende (30a) einer Hülle (30), wobei die Schutzhülse einen Durchgang aufweist, der mit einer inneren Schulter versehen ist, die dazu bestimmt ist, eine Stirnseite des offenen Endes (30a) der Hülle (30) zu schützen,
b) Einführen des mit der Schutzhülse versehenen Endes der Hülle (30a) in die Umhüllungsnase,
c) Isolieren eines Raumes, der Tabletten aufnimmt, und eines äußeren Raumes;
d) Füllen der Hülle mit Tabletten;
e) Unterbrechen des Füllens, wenn die Hülle eine bestimmte Anzahl Tabletten enthält;
f) Entfernen des Endes (30a) der Hülle aus der Umhüllungsnase,
g) Abtrennen der Schutzhülse.

18. Verfahren nach dem vorhergehenden Anspruch, welches außerdem den Schritt des Anbringens eines Stopfens an dem Ende (30a) der Hülle aufweist.

19. Verfahren zur Herstellung von Brennstäben nach Anspruch 17 oder 18, wobei während des Schrittes b) Antriebsmittel (106) aktiviert werden, um die Hülle (30) zu der Umhüllungsnase (102) hin zu bewegen, bis das erste Ende (30a) der Hülle (30) an der Umhüllungsnase (102) anliegt.

20. Verfahren nach einem der Ansprüche 17 bis 19, wobei während des Schrittes c) Begrenzungsmittel (108, 216, 306a) aktiviert werden, damit sie dichtend mit dem gesamten Umfang eines Begrenzungsabschnitts (40c) der Schutzhülse (40) zusammenwirken, um den stromaufwärtigen Bereich (112, 212, 312) von dem stromabwärtigen Bereich (114, 214, 314) zu trennen.

21. Verfahren nach einem der Ansprüche 17 bis 20, wobei während des Schrittes d) Zuführungsmittel aktiviert werden, um die Brennstofftabletten (20) in den stromaufwärtigen Bereich (112, 212, 312) zu bewegen, und Mittel zur Einführung der Brennstofftabletten (20) in den Durchgang (104) der Umhüllungsnase (102) aktiviert werden, bis die gewünschte Anzahl Brennstofftabletten (20) in der Hülle (30) enthalten ist.

22. Verfahren nach Anspruch 21. wobei während des Schrittes e) die Zuführungsmittel und die Mittel zur Einführung von Brennstofftabletten (20) deaktiviert werden.

23. Verfahren nach Anspruch 19, wobei während des Schrittes e) die Antriebsmittel (106) aktiviert werden, um die Hülle (30) von der Umhüllungsnase (102) zu trennen, bis sich die Hülle (30) in dem stromabwärtigen Bereich (114, 214, 314) befindet.

24. Verfahren nach einem der Ansprüche 17 bis 23, wobei während des Schrittes g) Mittel zum Entfernen (116, 214, 314) aktiviert werden, um die Schutzhülse (40) von der Hülle (30) zu trennen, und die Schutzhülse (40) ausgetragen wird.
